Europäisches Patentamt

European Patent Office

Office européen des brevets

(19)

(11) **EP 1 473 944 A2**

(12) **DEMANDE DE BREVET EUROPEEN**

(43) Date de publication:
**03.11.2004 Bulletin 2004/45**

(51) Int Cl.7: **H04N 7/26**

(21) Numéro de dépôt: **04364024.2**

(22) Date de dépôt: **30.03.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **11.04.2003 FR 0304590**

(71) Demandeur: **FRANCE TELECOM**
**75015 Paris (FR)**

(72) Inventeurs:
• **Bodo, Yann**
  **35700 Rennes (FR)**
• **Laurent, Nathalie**
  **35630 Vignoc (FR)**

(74) Mandataire: **Vidon, Patrice**
**Cabinet Vidon**
**16 B, rue Jouanet - B.P. 90333**
**Technopole Atalante**
**35703 Rennes Cedex 7 (FR)**

(54) **Procédé de tatouage d'une séquence vidéo à sélection adaptative de la zone d'insertion du tatouage, procédé de détection, dispositifs, support de données et programmes d'ordinateur correspondants.**

(57) L'invention concerne un procédé de tatouage d'une séquence d'images vidéo, mettant en oeuvre une étape d'insertion d'au moins un bit de tatouage sur au moins un vecteur de mouvement obtenu par estimation de mouvement entre deux images de ladite séquence, de façon à obtenir au moins un vecteur de mouvement tatoué. Le vecteur de mouvement est repéré par ses coordonnées dans un espace de référence, partitionné en deux types de zones complémentaires, à chacun desquels est associée une valeur binaire distincte. L'étape d'insertion met en oeuvre, si nécessaire, une modification des coordonnées dudit vecteur de mouvement, de façon qu'il se situe dans une zone de valeur binaire correspondant audit bit de tatouage à insérer.

Selon l'invention, lors de ladite modification, on détermine au moins deux vecteurs de mouvement tatoués potentiels et on sélectionne, parmi lesdits vecteurs de mouvement tatoués potentiels, un vecteur de mouvement tatoué optimal, selon au moins un critère prédéterminé, de façon que les coordonnées modifiées dudit vecteur de mouvement soient celles dudit vecteur de mouvement tatoué optimal.

Fig. 1

**Description**

Le domaine de l'invention est celui du tatouage de séquences vidéo. Un tel tatouage consiste à insérer, dans la séquence vidéo, une marque invisible pour l'utilisateur, destinée à assurer la protection du contenu de la séquence et à permettre le traçage de ses copies.

Plus précisément, l'invention concerne un procédé de tatouage d'une séquence vidéo par insertion d'une marque binaire sur les vecteurs de mouvement de la vidéo.

On connaît à ce jour plusieurs techniques de tatouage de séquences vidéo.

L'une de ces techniques consiste à appliquer, aux séquences vidéo, des méthodes de tatouage similaires à celles utilisées pour le tatouage d'images fixes. En effet, on peut considérer qu'un flux vidéo est composé d'une succession d'images fixes, et l'on peut donc tatouer les images "intra" de la séquence, selon un schéma appliqué classiquement aux images fixes.

Cependant, les séquences vidéo présentent de nombreuses propriétés qui peuvent être avantageusement exploitées pour développer une technique de tatouage qui leur est propre.

Parmi ces propriétés, on peut citer les aspects suivants :

- la taille brute d'une séquence vidéo est beaucoup plus importante que celle d'une image fixe, de sorte que l'espace d'insertion d'une marque est beaucoup plus élevé dans une séquence vidéo ;
- par rapport aux images fixes, les séquences vidéo comprennent une dimension temporelle, qui peut être utilisée pour l'insertion de la marque.

En outre, les séquences vidéo présentent des contraintes différentes de celles des images fixes. Ainsi :

- la complexité du schéma de tatouage d'une séquence vidéo doit être suffisamment faible pour que l'insertion et la détection d'une marque puissent s'effectuer à la volée ;
- la marque d'une séquence vidéo doit être moins visible que pour une image fixe, car le mouvement des objets augmente souvent sa perceptibilité pour l'utilisateur ;
- les flux vidéos sont souvent compressés, afin de réduire la taille brute des séquences. Le standard de compression le plus couramment utilisé est le standard MPEG2, et l'insertion de la marque peut se faire directement sur le format lui-même. Cependant, l'insertion sur le format décompressé ne doit pas entraîner, après compression, une augmentation de la taille du fichier ;
- les séquences vidéo peuvent subir davantage d'attaques que les images fixes, ce qui conduit souvent à insérer la marque, ou le tatouage, de manière redondante, de façon à réduire les chances de succès de ces attaques, et rendre le tatouage plus robuste. Lorsque le tatouage est inséré de façon redondante dans la séquence, il peut être estimé par un calcul de moyenne sur l'ensemble des images de la séquence. Une contrainte supplémentaire est donc que le tatouage, ou signature, doit pouvoir être détecté, même après une perte de synchronisation produite par la sélection d'une sous-séquence précise de la séquence vidéo considérée, ou par la perte d'images de la séquence.

Outre les techniques de tatouage issues du domaine des images fixes, on a donc également développé des techniques de tatouage propres à la vidéo, exploitant les propriétés avantageuses des séquences vidéos, et tenant compte des contraintes qui leur sont associées.

Parmi les techniques de tatouage spécifiques à la vidéo, plusieurs approches reposant sur l'insertion d'une marque sur des vecteurs de mouvement ont été proposées, notamment par F.Jordan, M. Kutter, T. Ebrahimi dans *« Proposal of a watermarking technique for hiding/retrieving data in compressed and decompressed video »*, (en français, "Proposition d'une technique de tatouage permettant de cacher/détecter des données dans une vidéo compressée ou décompressée") ISO/IEC document JTC1/SC29/WG11/ MPEG97/M2281, juillet 1997, et par J. Zhang, J. Li, L. Zhang dans *« Video watermarking technique in motion vector »*, (en français "Technique de tatouage vidéo sur un vecteur de mouvement") Proc. XIV Brazilian symposium on computer graphies and image processing, 15-18.10.2001, pp 179-182.

F. Jordan et al. proposent un algorithme de marquage consistant à insérer la marque dans les vecteurs de mouvement d'une vidéo. Cette technique repose sur la mise en oeuvre des étapes suivantes :

- une première étape de génération de la marque, qui est une suite binaire de longueur 16 bits ou 32 bits ;
- une deuxième étape d'insertion de la marque. Pour ce faire, les vecteurs de mouvements sont extraits du flux vidéo compressé, obtenu par un codée (ou codeur-décodeur) MPEG4. Si le flux vidéo est décompressé, on procède au préalable à une étape de compression de ce flux. Les différentes étapes de marquage s'appliquent sur l'une des deux composantes des vecteurs de mouvement. On sélectionne aléatoirement un bloc de pixels par image et son vecteur de mouvement est calculé. Deux bits de la marque sont insérés dans chaque composante du vecteur de mouvement.

Si l'on note *V* la composante verticale d'un vecteur de mouvement, et si *b*={*0,1*} est la valeur du bit à cacher, alors l'algorithme d'insertion de *b* dans *V* est le suivant :

*si ((V\*q+T)mod[2] ≠ b*
*alors V' = V + δ*
*sinon V' = V*
*avec T = 2\*dim*
*dim = taille de la fenêtre de recherche pour l'estimation de mouvement*
*δ = (2.n+1)/q*
*n=1 si le vecteur de mouvement est le vecteur nul.*
*n=0 sinon*
*q = facteur de modulation de l'amplitude du vecteur de mouvement*
*V' est le vecteur de mouvement marqué.*

En d'autres termes, on sélectionne autant de vecteurs de mouvement qu'il y a de bits dans la marque, c'est-à-dire 16 ou 32. Puis, pour chacun des 16 ou 32 vecteurs sélectionnés, on insère le bit correspondant de la marque dans l'une des composantes du vecteur de mouvement, par exemple la composante verticale, en modifiant sa parité.

- une troisième étape d'extraction de la marque, au cours de laquelle le vecteur de mouvement marqué V' est extrait du flux compressé. La marque est alors extraite de la façon suivante :

$$b = (V'\*q+T)mod[2]$$

J. Zhang et al. proposent une amélioration de la méthode ci-dessus proposée par F. Jordan et al., mais leur approche reste toutefois la même.

Ces deux techniques reposent donc sur la mise en oeuvre d'un algorithme de tatouage, basé sur l'insertion d'une marque au sein des vecteurs de mouvement d'une vidéo.

Cependant, un inconvénient majeur de ces techniques de l'art antérieur est qu'elles ne présentent pas une robustesse satisfaisante vis-à-vis d'éventuelles attaques de la séquence vidéo. Notamment, de telles techniques ne sont pas suffisamment robustes vis-à-vis d'attaques non malveillantes, comme la compression ou le changement de format (spatial ou temporel) du signal vidéo.

En effet, les techniques décrites ci-dessus proposées par F. Jordan et al. ou par J. Zhang et al. reposent sur la mise en oeuvre d'un algorithme de tatouage, basé sur l'insertion d'une marque au sein des vecteurs de mouvements d'une vidéo, utilisant la notion de parité pour l'ordonnée de ces vecteurs de mouvements.

Cette approche n'est, par définition, pas robuste puisque la moindre attaque peut transformer une ordonnée paire en ordonnée impaire et inversement.

En outre, selon ces techniques, on modifie généralement toujours la même composante prédéterminée des vecteurs de mouvement sélectionnés (par exemple la composante verticale), ce qui a pour effet d'accroître la visibilité de la marque dans la séquence vidéo. La visibilité de la marque est bien sûr désagréable pour l'utilisateur, qui perçoit une déformation de l'image.

Afin de pallier ces différents inconvénients, les inventeurs de la présente demande de brevet ont développé une nouvelle technique plus robuste de tatouage d'une séquence vidéo, décrite dans la demande de brevet français n°FR 02 13660 du 31 octobre 2002 au nom de la même demanderesse que la présente demande de brevet, intitulée « Procédé de tatouage d'un signal vidéo, système, support de données pour la mise en oeuvre de ce procédé, procédé d'extraction du tatouage d'un signal vidéo, système pour la mise en oeuvre de ce procédé ».

Selon cette technique, on sélectionne un vecteur de mouvement qui va porter le tatouage. On repère les coordonnées du vecteur de mouvement sélectionné dans un espace comprenant une première pluralité de zones associées à la valeur binaire 1 et une seconde pluralité de zones associées à la valeur binaire 0. On modifie ensuite éventuellement les coordonnées du vecteur de mouvement sélectionné, de façon qu'il se situe dans la zone dont la valeur binaire correspond à la valeur de la marque que l'on souhaite insérer sur le vecteur de mouvement sélectionné.

Ainsi, si l'on souhaite insérer une marque de valeur 0, et que le vecteur de mouvement sélectionné se situe dans une zone associée à la valeur binaire 1, on modifie les coordonnées du vecteur de mouvement en réalisant une symétrie centrale ou axiale pondérée par rapport aux bords de la zone.

Cette technique s'avère donc plus robuste que les méthodes proposées par F. Jordan et al. ou par J. Zhang et al., car elle définit un espace borné dans lequel se situe l'extrémité des vecteurs de mouvement (zones de valeur binaire 1 ou 0). Le tatouage réalisé ne repose donc plus seulement sur un changement de parité d'une composante d'un vecteur de mouvement, mais sur le déplacement du vecteur à tatouer dans une zone relativement large.

En conséquence, même en cas de filtrage ou de transformation légère de l'image, entraînant une modification des coordonnées du vecteur de mouvement tatoué, l'extrémité de ce dernier reste dans la zone de valeur binaire choisie en fonction de la marque. La marque est donc robuste à de telles attaques.

Cependant, bien que plus robuste, cette technique n'est pas optimale en termes d'invisibilité de la marque. En effet, les vecteurs de mouvement marqués induisent des déformations des images, qui sont parfois gênantes pour l'utilisateur.

En outre, la robustesse de cette technique vis-à-vis des attaques les plus courantes, du type compression, cropping ou miroir par exemple, n'est pas suffisante, et pourrait être améliorée.

L'invention a notamment pour objectif de pallier ces inconvénients de l'art antérieur.

Plus précisément, un objectif de l'invention est de fournir une technique de tatouage d'une séquence vidéo présentant une robustesse accrue par rapport aux techniques de l'art antérieur. Notamment, un objectif de l'invention est de fournir une telle technique qui soit particulièrement résistante, tant aux attaques malveillantes qu'aux attaques plus courantes de type filtrage ou compression.

Un autre objectif de l'invention est de mettre en oeuvre une telle technique qui permette de réduire la visibilité de la marque, ou du tatouage par rapport aux techniques de l'art antérieur. Notamment, un objectif de l'invention est de fournir une technique de tatouage vidéo, selon laquelle une marque est insérée sur un ou plusieurs vecteurs de mouvement, et qui permette de minimiser les déformations des vecteurs marqués par rapport aux techniques de l'art antérieur.

L'invention a encore pour objectif de fournir une telle technique qui permette une détection plus rapide d'une marque dans une séquence vidéo tatouée.

Un autre objectif de l'invention est de fournir une telle technique qui soit simple à mettre en oeuvre et peu coûteuse en termes de ressources.

Ces objectifs, ainsi que d'autres qui apparaîtront par la suite, sont atteints à l'aide d'un procédé de tatouage d'une séquence d'images vidéo, mettant en oeuvre une étape d'insertion d'au moins un bit de tatouage sur au moins un vecteur de mouvement obtenu par estimation de mouvement entre deux images de ladite séquence, de façon à obtenir au moins un vecteur de mouvement tatoué. Le vecteur de mouvement est repéré par ses coordonnées dans un espace de référence, partitionné en deux types de zones complémentaires, à chacun desquels est associée une valeur binaire distincte. L'étape d'insertion met en oeuvre, si nécessaire, une modification des coordonnées du vecteur de mouvement, de façon qu'il se situe dans une zone de valeur binaire correspondant au bit de tatouage à insérer.

Selon l'invention, lors de ladite modification, on détermine au moins deux vecteurs de mouvement tatoués potentiels et on sélectionne, parmi lesdits vecteurs de mouvement tatoués potentiels, un vecteur de mouvement tatoué optimal, selon au moins un critère prédéterminé, de façon que les coordonnées modifiées dudit vecteur de mouvement soient celles dudit vecteur de mouvement tatoué optimal.

Ainsi, l'invention repose sur une approche tout à fait nouvelle et inventive du tatouage de séquences vidéo, qui prend en compte une caractéristique intrinsèque de la vidéo, à savoir le mouvement. En effet, la technique de l'invention repose sur l'insertion d'une marque, ou tatouage, sur un ou plusieurs vecteurs de mouvement d'une séquence vidéo, qui met en oeuvre une modification des coordonnées du ou des vecteur(s) de mouvement sélectionné(s).

En outre, l'invention repose sur une sélection adaptative de la zone d'insertion de la marque, et constitue donc une amélioration de la technique décrite dans la demande de brevet français n°FR 02 13660. En effet, les coordonnées du vecteur de mouvement tatoué ne sont plus obtenues par simple symétrie centrale ou axiale par rapport aux frontières des deux zones de valeurs binaires 0 et 1, mais sont celles d'un vecteur de mouvement tatoué optimal. Ce vecteur tatoué optimal est choisi, en fonction d'un critère prédéterminé, parmi une pluralité de vecteurs de mouvement, qui représentent des vecteurs de mouvement tatoués potentiels, appartenant à différentes zones d'insertion de la marque potentielles.

Le vecteur de mouvement tatoué optimal appartient à une zone d'insertion optimale de la marque qui, lorsqu'elle est judicieusement choisie, permet d'accroître la force de la marque et sa transparence par rapport aux techniques de l'art antérieur, et améliore donc sa vitesse de détection.

Ainsi, par rapport à la technique de la demande n°FR 02 13660, on ne se contente plus, pour obtenir un vecteur de mouvement tatoué, d'appliquer une transformation géométrique prédéterminée au vecteur de mouvement sélectionné, mais on considère un ensemble de vecteurs de mouvement, qui représentent des vecteurs de mouvement tatoués potentiels, parmi lesquels on choisit le vecteur permettant d'obtenir le meilleur tatouage de la séquence (en termes de robustesse, de transparence ou de rapidité de détection du tatouage par exemple).

On rajoute donc un niveau dans le processus décisionnel de tatouage de la séquence, ce qui permet d'accroître, et la robustesse, et l'invisibilité de la marque.

Préférentiellement, ledit critère prédéterminé est un critère d'invisibilité dudit tatouage.

Un tel critère peut également être un critère de résistance de la marque à certains types d'attaques (compression ou filtrage par exemple), ou encore un critère de rapidité de détection de la marque dans une séquence vidéo tatouée.

De manière avantageuse, ledit espace de référence est associé à une grille de référence comprenant des blocs de dimensions prédéterminées, chacun desdits blocs comprenant une zone de chacun desdits types.

Dans un espace à deux dimensions, une telle grille de référence peut être une grille de l'espace cartésien associé à un repère orthogonal, constituée d'un ensemble de blocs rectangulaires ou carrés. Dans un mode de réalisation préféré de l'invention, chaque bloc comprend un sous-bloc de plus petites dimensions, centré à l'intérieur du bloc, correspondant à l'un des types de zone (par exemple la zone associée à la valeur binaire 1). L'autre zone (par exemple la zone associée à la valeur binaire 0) correspond au complémentaire du sous-bloc dans le bloc, et est située entre le sous-bloc et les frontières du bloc.

Avantageusement, ledit vecteur de mouvement étant situé dans un bloc de ladite grille de référence, appelé bloc de référence, lesdits vecteurs de mouvement tatoués potentiels sont recherchés dans la zone dudit bloc de référence de valeur binaire correspondant audit bit de tatouage.

Ainsi, on parcourt l'intégralité de la zone du bloc associée à la valeur 0 ou 1 que l'on veut insérer sur le vecteur de mouvement sélectionné ; on considère tous les vecteurs de mouvement appartenant à cette zone (ou seulement certains d'entre eux), qui représentent des vecteurs de mouvement tatoués potentiels, et l'on choisit parmi ceux-ci, en fonction du critère choisi, le vecteur de mouvement tatoué optimal. Lorsque le critère est un critère d'invisibilité de la marque, le vecteur optimal est celui qui rend la marque la moins visible pour l'utilisateur.

De manière préférentielle, lesdits vecteurs de mouvement tatoués potentiels sont également recherchés, dans une zone de valeur binaire correspondant audit bit de tatouage, appartenant à au moins un bloc adjacent audit bloc de référence.

En effet, les inventeurs de la présente demande de brevet exploitent avantageusement le fait que le vecteur tatoué optimal n'est pas nécessairement le vecteur dont les coordonnées sont les plus proches de celles du vecteur de mouvement tatoué.

Lorsque le critère choisi est un critère d'invisibilité de la marque, il est donc possible que le vecteur de mouvement tatoué optimal n'appartienne pas au même bloc de la grille de référence que le vecteur de mouvement initialement sélectionné pour porter la marque, mais en soit au contraire géographiquement assez éloigné.

Selon une variante préférentielle de l'invention, lesdits vecteurs de mouvement tatoués potentiels sont tous les vecteurs de mouvement situés dans ladite zone recherchée.

On considère ainsi tous les vecteurs de mouvement situés dans la ou les zone(s) dans lesquelles on recherche le vecteur tatoué optimal ; on peut ainsi procéder à un parcours pixel par pixel de l'intégralité de la ou des zone(s) de recherche appartenant à un ou plusieurs blocs de la grille de référence, pour considérer tous les vecteurs de mouvement qui représentent des vecteurs de mouvement tatoués potentiels.

Avantageusement, ledit critère prédéterminé est un critère d'optimisation d'un rapport signal à bruit (PSNR) associé à chacun desdits vecteurs de mouvement tatoués potentiels.

Le critère de PSNR (ou « Peak Signal to Noise Ratio ») est couramment utilisé dans le domaine du traitement de l'image et de la vidéo. Il permet d'évaluer le degré de fidélité d'une image par rapport à une image de référence : en l'espèce, il permet par exemple de mesurer le degré de fidélité d'une image tatouée d'une séquence vidéo par rapport à l'image d'origine non tatouée. Parmi tous les vecteurs de mouvement représentant des vecteurs de mouvement tatoués potentiels, le vecteur tatoué optimal est celui qui permet d'obtenir le meilleur PSNR.

De manière préférentielle, une image de ladite séquence vidéo étant associée à au moins deux niveaux hiérarchiques, ledit procédé met en oeuvre une estimation de mouvement sur au moins un couple d'images de ladite séquence pour au moins un desdits niveaux, appelé niveau estimé, de façon à déterminer un ensemble de vecteurs de mouvement dudit niveau estimé, et les vecteurs de mouvement d'un niveau hiérarchique supérieur sont obtenus par calcul d'une moyenne des vecteurs de mouvement associés dans ledit niveau estimé.

L'invention exploite donc également la notion de hiérarchie des vecteurs de mouvement, ce qui permet d'accroître encore la robustesse de la marque. Par exemple, dans une approche par blocs, une image de la séquence vidéo peut être considérée comme un ensemble de quatre blocs de pixels de l'image, eux-mêmes subdivisés en quatre sous-blocs respectifs présentant un plus petit nombre de pixels, et ainsi de suite jusqu'au sous-bloc unité de taille un pixel. A chaque niveau de décomposition, on peut associer un vecteur de mouvement au bloc ou au sous-bloc correspondant.

De façon avantageuse, un tel procédé de tatouage comprend une étape de sélection, parmi les vecteurs de mouvement du niveau hiérarchique le plus élevé, d'au moins un vecteur de mouvement sur lequel on met en oeuvre ladite étape d'insertion d'un bit de tatouage.

Par exemple, on choisit d'insérer un bit de tatouage sur le vecteur de mouvement d'un bloc sur deux du niveau hiérarchique le plus élevé.

Préférentiellement, ladite modification des coordonnées dudit vecteur de mouvement sélectionné est également appliquée aux vecteurs de mouvement correspondants d'au moins un desdits niveaux inférieurs, de façon à réaliser une insertion redondante dudit bit de tatouage.

Ainsi, lorsque l'on a choisi d'insérer un bit de tatouage sur un vecteur de mouvement du niveau hiérarchique le plus élevé, on reporte cette insertion également sur les vecteurs de mouvement correspondants du niveau inférieur.

Selon une caractéristique avantageuse de l'invention, ladite estimation de mouvement est de type « block matching ».

Une telle technique de « block matching » permet de calculer le vecteur de mouvement associé à un bloc de pixels de l'image. Elle consiste à évaluer le meilleur vecteur de mouvement permettant de reconstruire ce bloc courant, à partir d'un bloc de même taille de l'image précédente ou suivante de la séquence, déplacé à l'aide du vecteur de mouvement.

De manière préférentielle, un tel procédé de tatouage comprend également une étape de compensation de mouvement à partir dudit ou desdits vecteur(s) de mouvement tatoué(s), de façon à générer une séquence d'images vidéo tatouée.

Cette étape permet de reconstruire une séquence vidéo tatouée, sous la forme d'une succession d'images compensées, obtenues à partir des images originales auxquelles on applique les vecteurs de mouvement tatoués optimaux.

Selon une première variante avantageuse de l'invention, lesdits vecteurs de mouvement étant chacun associés à une région de ladite image, ladite compensation de mouvement est mise en oeuvre sur l'ensemble des régions de ladite image, associées à des vecteurs de mouvement tatoués ou non tatoués.

Selon une deuxième variante avantageuse de l'invention, lesdits vecteurs de mouvement étant chacun associés à une région de ladite image, ladite compensation de mouvement est mise en oeuvre sur la ou les région(s) de ladite image auxquelles sont associés le ou lesdits vecteur(s) de mouvement tatoué(s), et une image de ladite séquence d'images vidéo tatouée comprend lesdites régions sur lesquelles ladite compensation de mouvement est mise en oeuvre et au moins une région originale.

Ainsi, deux méthodes peuvent être envisagées dans le cadre de l'invention.

Une première méthode consiste à effectuer la compensation de mouvement à l'aide de l'ensemble des vecteurs de mouvement, tatoués ou non tatoués, associés à l'image, pour retrouver une version tatouée de l'image considérée.

Une deuxième méthode permet de n'effectuer la compensation de mouvement que pour les blocs de pixels de l'image correspondant aux vecteurs de mouvement modifiés par l'opération de tatouage, et à laisser les autres blocs de l'image considérée inchangés, afin d'obtenir une image, et donc une séquence vidéo, de meilleure qualité.

L'invention concerne également un procédé d'extraction d'un tatouage d'une séquence d'images vidéo tatouée selon le procédé de tatouage décrit précédemment.

Selon l'invention, un tel procédé d'extraction comprend une étape d'extraction d'au moins un bit de tatouage inséré sur au moins un vecteur de mouvement tatoué, ladite étape d'extraction comprenant des sous-étapes de :

- estimation de mouvement entre deux images de ladite séquence, de façon à obtenir ledit au moins un vecteur de mouvement tatoué ;
- analyse de la position dudit vecteur de mouvement tatoué dans un espace de référence, partitionné en deux types de zones complémentaires, à chacun desquels est associée une valeur binaire distincte ;
- attribution audit bit de tatouage de la valeur binaire de la zone dans laquelle se situe ledit vecteur de mouvement.

Avantageusement, ledit bit de tatouage étant inséré de manière redondante dans ladite séquence d'images vidéo, ledit procédé d'extraction comprend une étape de calcul d'au moins un coefficient de corrélation permettant d'affecter un indice de confiance audit bit de tatouage extrait.

L'invention concerne aussi un dispositif de tatouage d'une séquence d'images vidéo, comprenant des moyens d'insertion d'au moins un bit de tatouage sur au moins un vecteur de mouvement obtenu par estimation de mouvement entre deux images de ladite séquence, de façon à obtenir au moins un vecteur de mouvement tatoué, ledit vecteur de mouvement étant repéré par ses coordonnées dans un espace de référence, partitionné en deux types de zones complémentaires, à chacun desquels est associée une valeur binaire distincte, lesdits moyens d'insertion comprenant des moyens, activés si nécessaire, de modification des coordonnées dudit vecteur de mouvement, de façon qu'il se situe dans une zone de valeur binaire correspondant audit bit de tatouage à insérer.

Selon l'invention, lesdits moyens de modification comprennent des moyens de détermination d'au moins deux vecteurs de mouvement tatoués potentiels et de sélection, parmi lesdits vecteurs de mouvement tatoués potentiels, d'un vecteur de mouvement tatoué optimal, selon au moins un critère prédéterminé, de façon que les coordonnées modifiées dudit vecteur de mouvement soient celles dudit vecteur de mouvement tatoué optimal.

L'invention concerne encore un dispositif d'extraction d'un tatouage d'une séquence d'images vidéo tatouée selon le procédé de tatouage décrit précédemment. Selon l'invention, un tel dispositif d'extraction comprend des moyens d'extraction d'au moins un bit de tatouage inséré sur au moins un vecteur de mouvement tatoué, lesdits moyens d'extraction comprenant des moyens de :

- estimation de mouvement entre deux images de ladite séquence, de façon à obtenir ledit au moins un vecteur de mouvement tatoué ;
- analyse de la position dudit vecteur de mouvement tatoué dans un espace de référence, partitionné en deux types de zones complémentaires, à chacun desquels est associée une valeur binaire distincte ;
- attribution audit bit de tatouage de la valeur binaire de la zone dans laquelle se situe ledit vecteur de mouvement.

L'invention concerne aussi un support de données numérique pouvant être lu par un terminal, qui comporte des moyens de stockage d'un signal représentatif d'une séquence d'images vidéo tatouée selon le procédé de tatouage décrit précédemment.

L'invention concerne également un programme d'ordinateur comprenant des instruction de code de programme pour l'exécution des étapes du procédé de tatouage décrit précédemment lorsque ledit programme est exécuté sur un ordinateur.

L'invention concerne aussi un produit programme d'ordinateur comprenant des instructions de code de programme enregistré sur un support utilisable dans un ordinateur, comprenant :

- des moyens de programmation lisibles par ordinateur pour effectuer une étape d'insertion d'au moins un bit de tatouage sur au moins un vecteur de mouvement obtenu par estimation de mouvement entre deux images de ladite séquence, de façon à obtenir au moins un vecteur de mouvement tatoué, ledit vecteur de mouvement étant repéré par ses coordonnées dans un espace de référence, partitionné en deux types de zones complémentaires, à chacun desquels est associée une valeur binaire distincte ;
- des moyens de programmation lisibles par ordinateur pour effectuer une étape de modification, si nécessaire, des coordonnées dudit vecteur de mouvement, de façon qu'il se situe dans une zone de valeur binaire correspondant audit bit de tatouage à insérer ;
- des moyens de programmation lisibles par ordinateur pour effectuer une étape de détermination d'au moins deux vecteurs de mouvement tatoués potentiels et une étape de sélection, parmi lesdits vecteurs de mouvement tatoués potentiels, d'un vecteur de mouvement tatoué optimal, selon au moins un critère prédéterminé, de façon que les coordonnées modifiées soient celles dudit vecteur de mouvement tatoué optimal.

L'invention concerne enfin un signal représentatif d'une séquence vidéo d'images tatouée selon le procédé de tatouage décrit précédemment.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 présente un synoptique des différentes étapes mises en oeuvre par le procédé de tatouage d'une séquence vidéo de l'invention ;
- la figure 2 illustre la décomposition hiérarchique d'une image en blocs ;
- la figure 3 présente un exemple de grille de référence, partitionnée en zones de deux types associés chacun à une valeur binaire distincte, dans laquelle sont placés les vecteurs de mouvement selon l'invention ;
- la figure 4 décrit le principe de la recherche de l'ensemble des vecteurs de mouvement tatoués potentiels d'une zone de recherche donnée de la grille de la figure 3 ;
- la figure 5 illustre plus en détail la façon dont on parcourt l'ensemble des pixels de la zone de recherche de la figure 4 pour déterminer le vecteur de mouvement tatoué optimal ;
- la figure 6 présente un exemple de vecteur de mouvement tatoué potentiel de la zone de recherche de la figure 4 ;
- la figure 7 illustre l'utilisation du critère de PSNR permettant de déterminer un vecteur tatoué optimal dans le cadre d'une approche par blocs ;
- la figure 8, commentée en annexe 1, illustre la technique de tatouage décrite dans la demande de brevet français n° FR 02 13660.

Le principe général de l'invention repose sur la sélection adaptative de la zone d'insertion d'un bit de tatouage. En d'autres termes, le principe général de l'invention consiste, dans le cadre d'une technique de tatouage d'une séquence vidéo par insertion d'une marque sur les vecteurs de mouvement, à considérer plusieurs vecteurs de mouvement, qui représentent des vecteurs de mouvement tatoués potentiels, appartenant à différentes zones de même valeur binaire d'une grille de référence associée à l'image, et à choisir, parmi ces vecteurs, un vecteur de mouvement tatoué optimal permettant d'optimiser un critère prédéterminé, par exemple de robustesse ou d'invisibilité du tatouage.

Le tatouage de séquences vidéo (encore appelé « watermarking ») apparaît comme une nécessité pour la protection de leur contenu.

En effet, la protection de contenu vidéo a jusqu'à présent été assurée par l'existence de systèmes, dits propriétaires, qui ont cependant montré leurs faiblesses. De tels systèmes reposent généralement sur l'existence d'un secret, qui, une fois dévoilé, est aisément contournable et ne permet donc plus de protéger efficacement le contenu vidéo. C'est par exemple le cas du système CSS (pour « Content Scrambling System ») de protection des DVD (pour « Digital Versatile Disc »).

L'intérêt du tatouage réside dans le fait que la protection est invisible pour l'utilisateur et que le média n'est pas perceptuellement dégradé (comme dans les systèmes cryptant le média) : le support de données sur lequel est enregistrée la séquence vidéo est donc parfaitement utilisable.

Le tatouage vidéo trouve notamment des applications dans les domaines suivants :

- le cinéma numérique, pour lequel on cherche, par tatouage, à éviter qu'une personne malintentionnée enregistre un film projeté à l'écran ;
- la protection de DVD, pour lesquels on cherche à éviter la généralisation des copies non-autorisées, par des techniques de tatouage plus robustes que les procédés jusqu'à présent utilisés pour la protection de ce type de supports ;
- le cinéma on-line, qui représente l'une des applications futures des réseaux haut-débits et qui est un système proche de l'actuel pay-per-view. Le tatouage permettrait d'éviter la copie de films, ou permettrait un suivi des contenus diffusés.

L'algorithme de tatouage proposé par la présente invention repose sur l'insertion hiérarchique et adaptative d'une marque sur les vecteurs de mouvement d'une séquence vidéo.

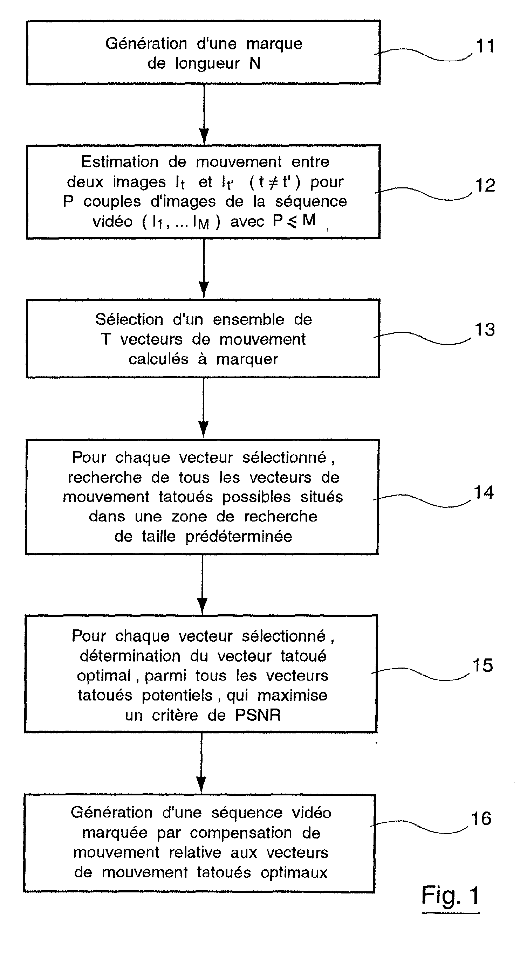

Ses différentes étapes sont désormais décrites plus en détail, en relation avec la figure 1.

Au cours d'une première étape référencée 11, on génère une marque de longueur donnée N, sous la forme d'une succession de N bits de valeur 0 ou 1.

Au cours d'une deuxième étape référencée 12, on réalise une estimation de mouvement entre deux images $I_t$ et $I_{t'}$ ($t \neq t'$) pour P couples de la séquence vidéo (I1, ...., IM) avec P<=M. Cette estimation de mouvement, mise en oeuvre selon une technique bien connue (par exemple de type « block matching »), permet de calculer un champ de vecteurs de mouvement entre les images $I_t$ et $I_{t'}$, pour chacun des P couples d'images considérés.

Parmi tous les vecteurs de mouvement calculés, on en sélectionne (13) ensuite T, suivant un critère prédéterminé (par exemple, déterminé par un processus pseudo-aléatoire de type PRNG (en anglais « Pseudo Random Number Generator » pour générateur de nombres pseudo-aléatoire) de type Yarrow), sur lesquels seront insérés les bits de la marque générée (11).

Pour chaque vecteur sélectionné, on parcourt ensuite (14) une zone de recherche de taille prédéterminée (par exemple une zone constituée de toutes les zones de valeur binaire adéquate du bloc de la grille de référence dans lequel se situe le vecteur sélectionné, et de chacun des blocs qui lui sont directement adjacents), pour déterminer tous les vecteurs de mouvement qui représentent des vecteurs de mouvement tatoués potentiels correspondants au vecteur sélectionné.

En fonction d'un critère prédéterminé (par exemple un critère d'invisibilité de la marque de type PSNR), on sélectionne (15), parmi tous les vecteurs de mouvementqui représentent des vecteurs de mouvement tatoués potentiels, le vecteur de mouvement tatoué optimal.

Au cours d'une étape référencée 16, on génère enfin la séquence vidéo marquée, en réalisant les compensations de mouvement relative aux vecteurs de mouvement tatoués optimaux.

On décrit désormais plus en détail chacune des étapes référencées 11 à 16 ci-dessus.

La marque générée au cours de l'étape référencée 11 peut représenter une information (de type droit d'auteurs, ...), et est transcrite en mode binaire {-1,1} suivant une longueur donnée N. Elle est donc constituée de N bits, qui sont chacun insérés sur un vecteur de mouvement de la séquence d'images. Pour accroître la robustesse de la marque, elle peut être insérée de façon redondante dans la séquence vidéo : en d'autres termes, plusieurs vecteurs de mouvement distincts de cette séquence peuvent porter le même bit de tatouage.

Pour insérer la marque de manière redondante, on peut notamment réaliser une estimation de mouvement entre deux images It et It'($t \neq t'$) pour P couples de la séquence vidéo (I1, ...., IM) avec P≤M. La marque pourra alors être insérée T/N fois dans la séquence.

Dans un mode particulier de réalisation, l'estimateur de mouvement utilisé est de type « block matching », et l'estimation de mouvement se fait entre les images t et t+1 de la séquence (respectivement entre les images t+1 et t, selon que l'on réalise une estimation de mouvement avant ou arrière).

On rappelle que le « block matching » consiste, pour chaque bloc de pixels de l'image considérée, à évaluer le meilleur vecteur de mouvement permettant de reconstruire ce bloc courant à partir d'un bloc de même taille de l'image précédente ou suivante, déplacé à l'aide du vecteur de mouvement. Pour ce faire, on réalise une recherche autour du bloc courant dans l'image précédente ou suivante, afin de déterminer le vecteur de mouvement qui minimise une fonction de coût classique connue sous le nom de DFD (pour « Displaced Frame Difference », ou variation de luminance) représentant la différence entre le bloc de l'image précédente ou suivante déplacé et le bloc courant dans l'image considérée.

Dans un mode de réalisation préféré de l'invention, on réalise une estimation de mouvement hiérarchique de L niveaux pour le marquage (avec $L \geq 1$). Une telle hiérarchisation (utilisation d'une pluralité de niveaux imbriqués) permet avantageusement d'étaler la marque.

Pour ce faire, on considère que l'image est constituée d'un ensemble de blocs 21 de taille 2Nx2N pixels, eux-mêmes divisés en sous-blocs 22 de taille NxN pixels par exemple, et ainsi de suite. On réalise une estimation de mouvement sur les blocs 22 de taille NxN, afin d'obtenir les vecteurs de mouvement associés à chacun de ces blocs. On réalise ensuite un moyennage des vecteurs de mouvements obtenus, afin de déterminer les vecteurs de mouvement du niveau hiérarchique supérieur associés à chacun des blocs 21 de taille 2Nx2N. Cette opération de calcul de moyenne peut être poursuivie pour des blocs 23 de taille 4Nx4N, et ainsi de suite jusqu'au niveau hiérarchique le plus grossier.

On réalise donc l'estimation de mouvement sur un niveau hiérarchique assez fin, et on détermine à partir de cette estimation fine, les vecteurs de mouvement associés aux niveaux hiérarchiques plus grossiers.

Dans un mode de réalisation particulier de l'invention, on utilise 2 niveaux de hiérarchie et les blocs initiaux utilisés lors de l'estimation de mouvement sont de taille 4x4 pixels.

Lorsque tous les vecteurs de mouvement ont été calculés lors de l'étape d'estimation de mouvement 12, on se place au niveau le plus grossier de la hiérarchie, et on sélectionne un ensemble de T vecteurs de mouvement (et donc un ensemble de blocs auxquels ils sont associés), sur lesquels sera inséré le tatouage.

La sélection des blocs se fait selon une règle prédéfinie, qui peut être déterministe ou pseudo-aléatoire. Dans un mode particulier de réalisation, on utilise une sélection pseudo-aléatoire PRNG de type Yarrow. Ce sont les blocs du niveau le plus grossier qui sont sélectionnés.

Après la sélection 13 des T vecteurs de mouvement sur lesquels on souhaite insérer la marque, on procède ensuite, pour chacun de ces vecteurs, à une recherche 14 de tous les vecteurs de mouvement qui représentent des vecteurs de mouvement tatoués potentiels correspondants, dans une zone de recherche prédéterminée.

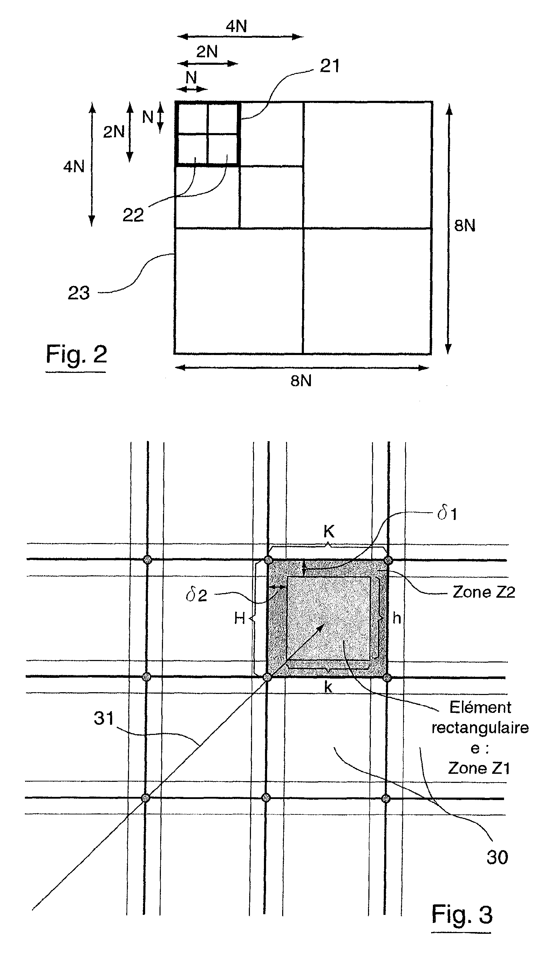

Pour ce faire, on s'appuie sur une grille de référence, illustrée en figure 3.

Dans le mode de réalisation illustré sur cette figure, cette grille est rectangulaire et est générée dans le domaine cartésien. L'axe des abscisses correspond aux lignes des images et l'axe des ordonnées aux colonnes.

La grille est composée d'une pluralité de blocs rectangulaires 30 de taille H x K pixels. Dans un mode de réalisation particulier de l'invention, on utilise une grille carrée avec H = K = 7 pixels.

Chaque bloc comprend deux zones complémentaires Z1 et Z2. La zone Z1 est rectangulaire, de taille h x k pixels, et centrée dans le bloc 30. La zone Z2 est située en périphérie de Z1, entre Z2 et les frontières du bloc.

On choisit de préférence les valeurs de h et k de telle façon que les zones Z1 et Z2 soient de même aire.

La zone Z1 est associée à la valeur binaire 1 et la zone Z2 à la valeur binaire 0.

On place chaque vecteur de mouvement sélectionné 31 sur la grille, et on détermine le bloc 30, ainsi que la zone Z1 ou Z2 dans lesquels il se situe.

Si le vecteur 31 se situe dans une zone Z1, comme illustré sur la figure 3, et que l'on souhaite insérer sur ce vecteur 31 un bit de tatouage de valeur 1, il n'est pas nécessaire de déplacer le vecteur 31 par modification de ses coordonnées.

Si en revanche on souhaite insérer sur le vecteur 31 un bit de tatouage de valeur 0, il faut modifier les coordonnées du vecteur de mouvement 31 de façon qu'il se situe dans une zone Z2 de la grille associée à la valeur binaire 0.

Inversement, si le vecteur 31 se trouve dans une zone Z2 et que l'on souhaite le marquer de la valeur 0, il n'est pas nécessaire de le modifier ; si en revanche on souhaite le marquer de la valeur 1, il faut modifier ses coordonnées pour obtenir un vecteur de mouvement tatoué situé dans une zone Z1 de la grille de référence.

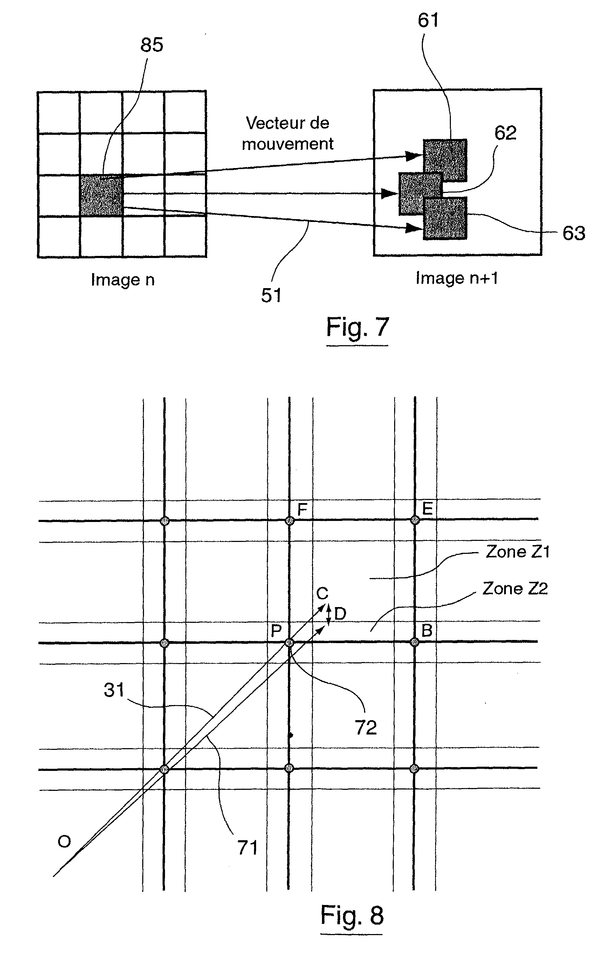

L'annexe 1, qui fait intégralement partie de la présente demande de brevet, décrit, en relation avec la figure 8, la technique de tatouage d'un vecteur de mouvement 31 décrite dans la demande de brevet n°FR 02 13660.

Selon cette technique, le modèle de modification des vecteurs de mouvements 31 était un modèle déterministe. Selon la présente invention en revanche, cette technique de tatouage est améliorée par élargissement de l'espace de recherche du vecteur de mouvement tatoué.

La présente invention constitue donc un perfectionnement de la technique décrite en annexe 1 en ce que, après sélection des vecteurs de mouvement représentatifs destinés à porter le tatouage, on procède à une sélection adaptative de la zone d'insertion (c'est-à-dire de la zone dans laquelle va se situer le vecteur de mouvement tatoué après modification de ses coordonnées) dans un voisinage du vecteur sélectionné pour le marquage.

En effet, selon la technique objet de la demande de brevet n°FR 02 13660, chaque vecteur de mouvement sélectionné est associé à un unique point de référence (correspondant à l'extrémité du bloc de la grille de référence dans lequel se situe le vecteur de mouvement, la plus proche de l'extrémité de ce vecteur). Les coordonnées du vecteur de mouvement tatoué sont déterminées directement, selon des règles de symétrie prédéfinies, en fonction de la distance et de la position du vecteur de mouvement par rapport à ce point de référence : le vecteur tatoué est toujours situé dans un voisinage direct du point de référence associé.

Selon la présente invention en revanche, on procède à une recherche étendue de la position optimale du vecteur de mouvement tatoué, non seulement à proximité du point de référence, mais également dans un voisinage plus ou moins large de celui-ci.

Cette recherche permet de sélectionner une zone d'insertion de la marque (c'est-à-dire la zone dans laquelle se situe le vecteur de mouvement tatoué) optimale en termes de PSNR et de robustesse.

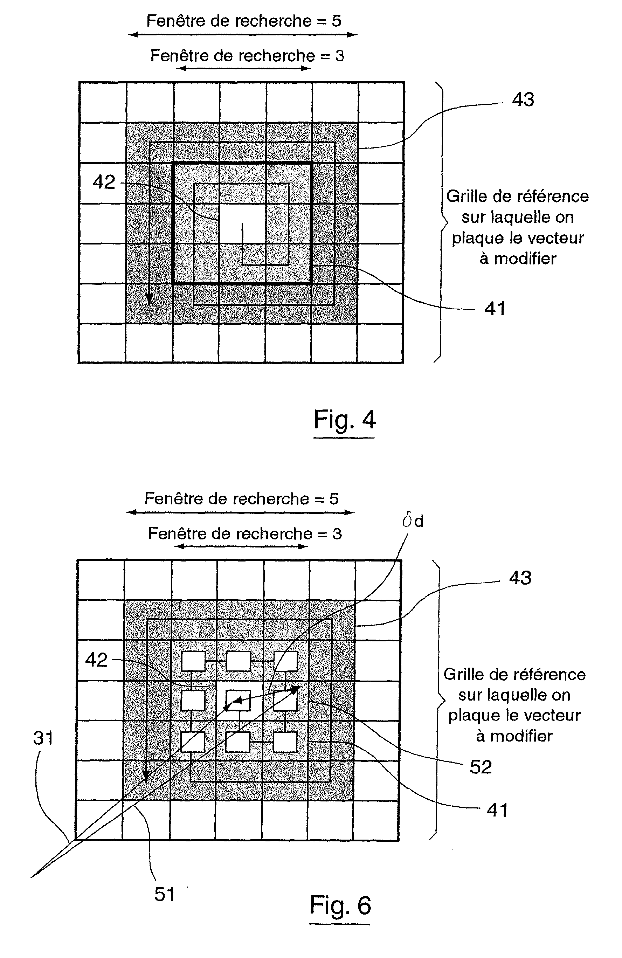

Dans le mode de réalisation particulier illustré en figure 4, on choisit comme zone de recherche un ensemble 41 de 9 blocs centrés sur le bloc 42 (y inclus ce dernier) de la grille de référence 43. En d'autres termes, outre le bloc 42 dans lequel se situe le vecteur de mouvement à marquer 31, on recherche également les vecteurs de mouvement tatoués potentiels dans une fenêtre de recherche de largeur 3 blocs, comprenant tous les blocs directement adjacents au blocs 42.

Bien sûr, au sein de cette zone de recherche, on ne considère que les vecteurs de mouvement qui représentent des vecteurs de mouvement tatoués potentiels situés dans les zones Z1 ou Z2 correspondant au bit de tatouage à insérer.

Ainsi qu'illustré en figure 4, on pourrait également choisir une fenêtre de recherche 43 de 5 blocs par 5 par exemple. La taille de la fenêtre de recherche est paramétrable.

Au lieu de construire le vecteur tatoué par simple symétrie, comme décrit en annexe 1, on réalise au cours de l'étape référencée 14, une recherche exhaustive dans la zone de recherche 41 ou 43 déterminée à partir du point de référence associé au vecteur de mouvement 31.

L'étape 15 de détermination du vecteur de mouvement tatoué optimal consiste ensuite à positionner le vecteur de mouvement 31 sur l'ensemble des pixels de la zone de recherche 41 ou 43 qui maximise un critère basé sur le calcul du PSNR.

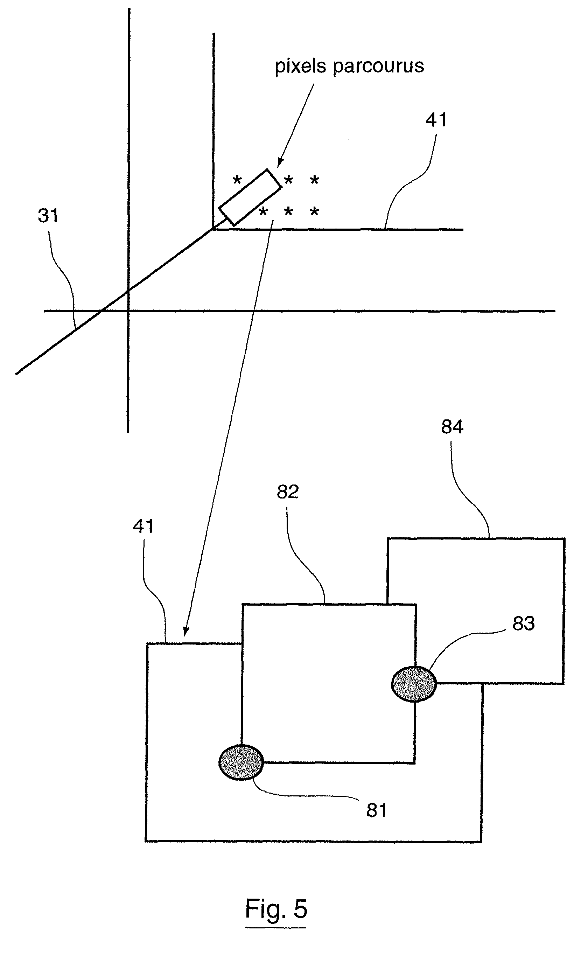

Pour ce faire, on parcourt l'ensemble des blocs 30 de taille 8x8 pixels (en modifiant en conséquence les coordonnées du vecteur de mouvement 31) de la zone de recherche 41 ou 43, ainsi qu'illustré en figure 5.

Le vecteur de mouvement 31 est successivement positionné sur chacun des pixels (81,83 par exemple) de la zone de recherche 41 (ou 43). A chaque pixel 81 (respectivement 83) parcouru, on associe un bloc 82 (respectivement 84) construit de telle façon que le pixel 81 (respectivement 83) soit situé en bas à gauche de ce bloc. Les différents blocs 82, 84 ne sont pas disjoints, et peuvent se chevaucher.

Ce sont ces différents blocs 82, 84 associés au pixel courant 81, 83 qui servent à la détermination du PSNR, ainsi qu'exposé dans la suite en relation avec la figure 7.

On détermine ensuite une variation $\delta d$ correspondant au déplacement du vecteur de mouvement 31 entre chacun des nouveaux blocs 82, 84 8x8 de la région 52 de la grille de référence et le bloc original 42, ainsi qu'illustré en figure 6.

On notera que sur la figure 6, le vecteur de mouvement non marqué 31 est situé dans une zone Z1 associée à la valeur binaire 1 du bloc 42. Le vecteur de mouvement 51 qui représente un vecteur de mouvement tatoué potentiel est situé dans une zone Z2 associée à la valeur binaire 0 de la région 52, ce qui correspond à l'insertion d'un bit de tatouage 0.

Ainsi qu'illustré sur la figure 7, chaque vecteur de mouvement 51, qui représente un vecteur de mouvement tatoué potentiel d'une image n de la séquence vidéo, lorsqu'il est appliqué à un bloc initial 85, permet d'obtenir un bloc compensé 61, 62 ou 63 par exemple, de l'image suivante n+1.

On procède à un calcul de PSNR entre le bloc initial 85 et chacun des blocs compensés 61, 62 et 63.

On rappelle que le PSNR est défini, en décibels, par la formule suivante : $PSNR = 10 \log \frac{m^2}{MSE}$, où m est la valeur maximale que peut prendre un pixel (par exemple 255 si l'on considère des images en niveaux de gris à 8 bits), et où MSE désigne une erreur quadratique moyenne entre deux images I et Î définie par :

$$MSE = \frac{1}{TXY} \sum_{t} \sum_{x} \sum_{y} \left[ I(x,y,t) - \hat{I}(x,y,t) \right]^2,$$

pour des images de taille XxY d'une séquence de T trames.

Le vecteur de mouvement tatoué optimal est celui qui permet d'obtenir, à partir du bloc initial 85, le bloc 61, 62 ou 63 pour lequel on obtient le PSNR le plus élevé : en effet, ce bloc est celui qui permet d'obtenir la représentation la plus fidèle de l'image d'origine.

La variation $\delta d$ associée à ce vecteur de mouvement tatoué optimal est ensuite appliquée aux vecteurs mouvement des 4 blocs fils 4x4 du bloc initial 85.

A partir du calcul de PSNR pour chacun des blocs fils 4x4, on en déduit le PSNR moyen de l'ensemble de ces blocs.

Lorsque le vecteur de mouvement tatoué optimal a été sélectionné, on réalise ensuite une descente dans les niveaux plus fins de la hiérarchie, afin de répercuter les modifications des coordonnées du vecteur mouvement sur les vecteurs du niveau le plus fin, de façon à réaliser un étalement de la marque.

L'invention met donc en oeuvre une approche hiérarchique du procédé de tatouage.

Lorsque tous les vecteurs mouvement sélectionnés au cours de l'étape référencée 13 ont été tatoués, ils sont alors utilisés pour générer (16) la séquence vidéo marquée, en effectuant une compensation de mouvement. Deux méthodes peuvent alors être envisagées :

- selon une première méthode, on effectue une compensation de mouvement sur l'ensemble des blocs de l'image, que ces blocs soient associés à des vecteurs de mouvement tatoués ou non tatoués ;
- selon une deuxième méthode, on effectue une compensation sur les blocs sélectionnés au cours de l'étape référencée 13, et on complète cette image par les blocs originaux restants, de façon à obtenir une image de meilleure qualité.

Selon l'invention, la détection d'une marque dans une séquence vidéo tatouée se fait en deux étapes :

- on met tout d'abord en oeuvre un procédé dual au procédé de tatouage décrit précédemment, de façon à extraire la marque. Ce procédé consiste à:

  - réaliser une estimation de mouvement entre des couples d'images de la séquence vidéo tatouée ;
  - en déduire un ensemble de vecteurs mouvement sur des blocs 4x4 de l'image ;
  - réaliser un moyennage de ces vecteurs de mouvement, de façon à déterminer les vecteurs de mouvement associés aux blocs 8x8 ;
  - placer ces vecteurs de mouvement moyens sur la grille de référence ;
  - pour chacun de ces vecteurs, selon sa position dans une zone Z1 ou Z2 de la grille, en déduire la valeur 1 ou 0 du bit de tatouage qu'il porte ;
  - regénérer la marque, sous la forme d'une suite binaire de N bits, à partir de tous les bits de tatouage extraits ;

- on procède ensuite à une corrélation statistique, permettant de déterminer un seuil de confiance caractérisant la présence ou la non-présence de la marque. En effet, la marque peut être insérée de manière redondante dans l'image (par exemple 2,5 fois par image), et une telle étape de corrélation statistique permet par exemple de déterminer si la marque obtenue est bien identique à la marque qui avait été insérée.

Les deux règles de corrélation ci-dessous peuvent être utilisées.

$$\textbf{Règle de corrélation 1:}\quad C = \frac{\left(\tilde{W} - \overline{\tilde{W}}\right) * \left(W - \overline{W}\right)}{\sqrt{\left(\tilde{W} - \overline{\tilde{W}}\right)^2 * \left(W - \overline{W}\right)^2}}$$

$\tilde{W}$ : marque extraite
$\overline{\tilde{W}}$ : moyenne de $\tilde{W}$
$W$ : marque originale
$\overline{W}$ : moyenne de $W$

$$\textbf{Règle de corrélation 2:}\quad C_n = \frac{C_{n-1} * (n-1) + \left(1 - \frac{d(\tilde{W}, W)}{8}\right)}{n}$$

$n$ : nombre d'images
$d(\tilde{W}, W)$ : distance de Hamming

Afin de valider la phase de détection, on réalise donc une accumulation des coefficients de corrélation pour la règle 1 afin d'obtenir un indice de confiance pour l'ensemble de la vidéo. La règle 2 représente déjà une accumulation.

**ANNEXE 1 :**

**Technique de tatouage d'un vecteur de mouvement selon la demande de brevet n°FR 02 13660 au nom de la même demanderesse que la présente demande de brevet.**

La règle d'insertion de la marque sur un vecteur de mouvement 31 OC est basée sur une grille de référence illustrée en figure 8.

Cette grille rectangulaire est générée dans le domaine cartésien. L'axe des abscisses correspond aux lignes des images et l'axe des ordonnées aux colonnes. La grille est constituée d'un ensemble d'éléments E de taille HxK pixels. Avec H, K=1, ..., J (dans un mode particulier de l'invention , on utilise une grille carrée avec H = K = 7)

Pour chaque vecteur de mouvement calculé lors du processus d'estimation de mouvement, on place le vecteur de mouvement OC 31 sur la grille, on détermine son point de référence P 72 qui correspond à l'un des sommets de l'élément rectangulaire E auquel appartient le vecteur OC 31. Pour calculer le point de référence P 72 d'un vecteur de mouvement, on choisit le point de l'élément rectangulaire E qui minimise une distance entre l'extrémité C du vecteur 31 et un des 4 sommets de E. Dans un mode particulier de réalisation, on utilise la norme L1.

On modifie ensuite le vecteur 31 suivant la règle suivante :

- On génère un élément rectangulaire e inclus dans E de taille hxk avec h = H - $\delta$1 et k = K - $\delta$2 avec $\delta$1 et $\delta$2 tels que l'aire de e soit égale à l'aire de E-e. L'élément e correspond à la zone Z1, associée à la valeur binaire 1 et l'élément E-e à la zone Z2, associée à la valeur binaire 0 ;
- Si on souhaite insérer le bit 1 et que le vecteur de mouvement est en Z1, on ne fait rien.
- Si on souhaite insérer le bit 1 et que le vecteur de mouvement est en Z2, on le déplace en Z1. Pour ce faire, on déplace C en D selon une direction axiale :

$$\begin{cases} V'x = Vx + \delta_2 - PC_x - 1 \quad cas\ 4a \\ V'y = Vy + \delta_1 - PC_y - 1 \quad cas\ 4b \end{cases}$$

ou selon une symétrie centrale de centre B :

$$\begin{cases} V'x = Vx + \delta_2 - PC_x - 1 \\ V'y = Vy + \delta_1 - PC_y - 1 \end{cases}$$

où Vx et Vy représentent respectivement l'abscisse et l'ordonnée du vecteur OC 31, et V'x et V'y les coordonnées du vecteur tatoué OD 71.

En d'autres termes, lorsque le point C est situé à égale distance des bords BP et FP de E, on déplace le vecteur OC 31 par symétrie centrale pondérée de centre P, par exemple selon la relation suivante :
PD=-2/5PC.

Si en revanche le point C est situé plus près de l'une des frontières de la zone Z1, le point D est obtenue en réalisant une symétrie axiale pondérée (par exemple avec un coefficient 2/5) du vecteur OC 31 par rapport à cette frontière.

- Si on souhaite insérer le bit 0 et que le vecteur de mouvement est en Z1, on le déplace en Z2 en réalisant une symétrie centrale pondérée de centre B.
On déplace donc C en D.
Dans un mode particulier de réalisation, la pondération utilisée amène à la modification suivante

$$\begin{cases} V'x = Vx + \delta_2 - PC_x - 1 \\ V'y = Vy + \delta_1 - PC_y - 1 \end{cases}$$

- Si on souhaite insérer le bit 0 et que le vecteur de mouvement est en Z2, on ne fait rien.

**Revendications**

1.  Procédé de tatouage d'une séquence d'images vidéo, mettant en oeuvre une étape d'insertion d'au moins un bit de tatouage sur au moins un vecteur de mouvement obtenu par estimation de mouvement entre deux images de ladite séquence, de façon à obtenir au moins un vecteur de mouvement tatoué,
    ledit vecteur de mouvement étant repéré par ses coordonnées dans un espace de référence, partitionné en deux types de zones complémentaires, à chacun desquels est associée une valeur binaire distincte,
    ladite étape d'insertion mettant en oeuvre, si nécessaire, une modification des coordonnées dudit vecteur de mouvement, de façon qu'il se situe dans une zone de valeur binaire correspondant audit bit de tatouage à insérer,
    **caractérisé en ce que**, lors de ladite modification, on détermine au moins deux vecteurs de mouvement tatoués potentiels et on sélectionne, parmi lesdits vecteurs de mouvement tatoués potentiels, un vecteur de mouvement tatoué optimal, selon au moins un critère prédéterminé, de façon que les coordonnées modifiées dudit vecteur de mouvement soient celles dudit vecteur de mouvement tatoué optimal.

2.  Procédé de tatouage selon la revendication 1, **caractérisé en ce que** ledit critère prédéterminé est un critère d'invisibilité dudit tatouage.

3.  Procédé de tatouage selon l'une quelconque des revendications 1 et 2, **caractérisé en ce que** ledit espace de référence est associé à une grille de référence comprenant des blocs de dimensions prédéterminées, chacun desdits blocs comprenant une zone de chacun desdits types.

4.  Procédé de tatouage selon la revendication 3, **caractérisé en ce que**, ledit vecteur de mouvement étant situé dans un bloc de ladite grille de référence, appelé bloc de référence, lesdits vecteurs de mouvement tatoués potentiels sont recherchés dans la zone dudit bloc de référence de valeur binaire correspondant audit bit de tatouage.

5.  Procédé de tatouage selon la revendication 4, **caractérisé en ce que** lesdits vecteurs de mouvement tatoués potentiels sont également recherchés, dans une zone de valeur binaire correspondant audit bit de tatouage, appartenant à au moins un bloc adjacent audit bloc de référence.

6.  Procédé de tatouage selon l'une quelconque des revendications 4 et 5, **caractérisé en ce que** lesdits vecteurs de mouvement tatoués potentiels sont tous les vecteurs de mouvement situés dans ladite zone recherchée.

7.  Procédé de tatouage selon l'une quelconque des revendications 1 à 6, **caractérisé en ce que** ledit critère prédéterminé est un critère d'optimisation d'un rapport signal à bruit (PSNR) associé à chacun desdits vecteurs de mouvement tatoués potentiels.

8.  Procédé de tatouage selon l'une quelconque des revendications 1 à 7, **caractérisé en ce que**, une image de ladite séquence vidéo étant associée à au moins deux niveaux hiérarchiques, ledit procédé met en oeuvre une estimation de mouvement sur au moins un couple d'images de ladite séquence pour au moins un desdits niveaux, de façon à déterminer un ensemble de vecteurs de mouvement dudit niveau,
    et **en ce que** les vecteurs de mouvement d'un niveau hiérarchique supérieur sont obtenus par calcul d'une moyenne des vecteurs de mouvement associés dans le niveau inférieur.

9.  Procédé de tatouage selon la revendication 8, **caractérisé en ce qu'**il comprend une étape de sélection, parmi les vecteurs de mouvement du niveau hiérarchique le plus élevé, d'au moins un vecteur de mouvement sur lequel on met en oeuvre ladite étape d'insertion d'un bit de tatouage.

10. Procédé de tatouage selon les revendications 8 et 9, **caractérisé en ce que** ladite modification des coordonnées dudit vecteur de mouvement sélectionné est également appliquée aux vecteurs de mouvement correspondants d'au moins un desdits niveaux inférieurs, de façon à réaliser une insertion redondante dudit bit de tatouage.

11. Procédé de tatouage selon lune quelconque des revendications 1 à 10, **caractérisé en ce que** ladite estimation de mouvement est de type « block matching ».

12. Procédé de tatouage selon l'une quelconque des revendications 1 à 11, **caractérisé en ce qu'**il comprend également une étape de compensation de mouvement à partir dudit ou desdits vecteur(s) de mouvement tatoué(s), de façon à générer une séquence d'images vidéo tatouée.

**13.** Procédé de tatouage selon la revendication 12, **caractérisé en ce que**, lesdits vecteurs de mouvement étant chacun associés à une région de ladite image, ladite compensation de mouvement est mise en oeuvre sur l'ensemble des régions de ladite image, associées à des vecteurs de mouvement tatoués ou non tatoués.

**14.** Procédé de tatouage selon la revendication 12, **caractérisé en ce que**, lesdits vecteurs de mouvement étant chacun associés à une région de ladite image, ladite compensation de mouvement est mise en oeuvre sur la ou les région(s) de ladite image auxquelles sont associés le ou lesdits vecteur(s) de mouvement tatoué(s), et **en ce qu'**une image de ladite séquence d'images vidéo tatouée comprend lesdites régions sur lesquelles ladite compensation de mouvement est mise en oeuvre et au moins une région originale.

**15.** Procédé d'extraction d'un tatouage d'une séquence d'images vidéo tatouée selon le procédé de l'une quelconque des revendications 1 à 14, **caractérisé en ce qu'**il comprend une étape d'extraction d'au moins un bit de tatouage inséré sur au moins un vecteur de mouvement tatoué,
ladite étape d'extraction comprenant des sous-étapes de :

- estimation de mouvement entre deux images de ladite séquence, de façon à obtenir ledit au moins un vecteur de mouvement tatoué ;
- analyse de la position dudit vecteur de mouvement tatoué dans un espace de référence, partitionné en deux types de zones complémentaires, à chacun desquels est associée une valeur binaire distincte ;
- attribution audit bit de tatouage de la valeur binaire de la zone dans laquelle se situe ledit vecteur de mouvement.

**16.** Procédé d'extraction selon la revendication 15, **caractérisé en ce que**, une image de ladite séquence vidéo tatouée étant associée à au moins deux niveaux hiérarchiques, ledit procédé met en oeuvre ladite estimation de mouvement sur au moins un couple d'images de ladite séquence pour au moins un desdits niveaux, de façon à déterminer un ensemble de vecteurs de mouvement dudit niveau,
et **en ce que** ledit vecteur de mouvement tatoué d'un niveau hiérarchique supérieur est obtenu par calcul d'une moyenne de vecteurs de mouvement associés dans le niveau inférieur.

**17.** Procédé d'extraction selon l'une quelconque des revendications 15 et 16, **caractérisé en ce que**, ledit bit de tatouage étant inséré de manière redondante dans ladite séquence d'images vidéo, ledit procédé d'extraction comprend une étape de calcul d'au moins un coefficient de corrélation permettant d'affecter un indice de confiance audit bit de tatouage extrait.

**18.** Dispositif de tatouage d'une séquence d'images vidéo, comprenant des moyens d'insertion d'au moins un bit de tatouage sur au moins un vecteur de mouvement obtenu par estimation de mouvement entre deux images de ladite séquence, de façon à obtenir au moins un vecteur de mouvement tatoué,
ledit vecteur de mouvement étant repéré par ses coordonnées dans un espace de référence, partitionné en deux types de zones complémentaires, à chacun desquels est associée une valeur binaire distincte,
lesdits moyens d'insertion comprenant des moyens, activés si nécessaire, de modification des coordonnées dudit vecteur de mouvement, de façon qu'il se situe dans une zone de valeur binaire correspondant audit bit de tatouage à insérer,
**caractérisé en ce que** lesdits moyens de modification comprennent des moyens de détermination d'au moins deux vecteurs de mouvement tatoués potentiels et de sélection, parmi lesdits vecteurs de mouvement tatoués potentiels, d'un vecteur de mouvement tatoué optimal, selon au moins un critère prédéterminé, de façon que les coordonnées modifiées dudit vecteur de mouvement soient celles dudit vecteur de mouvement tatoué optimal.

**19.** Dispositif d'extraction d'un tatouage d'une séquence d'images vidéo tatouée selon le procédé de l'une quelconque des revendications 1 à 14, **caractérisé en ce qu'**il comprend des moyens d'extraction d'au moins un bit de tatouage inséré sur au moins un vecteur de mouvement tatoué,
lesdits moyens d'extraction comprenant des moyens de :

- estimation de mouvement entre deux images de ladite séquence, de façon à obtenir ledit au moins un vecteur de mouvement tatoué ;
- analyse de la position dudit vecteur de mouvement tatoué dans un espace de référence, partitionné en deux types de zones complémentaires, à chacun desquels est associée une valeur binaire distincte ;
- attribution audit bit de tatouage de la valeur binaire de la zone dans laquelle se situe ledit vecteur de mouvement.

**20.** Signal représentatif d'une séquence d'images vidéo enregistré sur un support utilisable dans un ordinateur, ladite séquence d'images vidéo étant tatouée selon le procédé de tatouage de l'une quelconque des revendications 1 à 14.

**21.** Programme d'ordinateur comprenant des instruction de code de programme pour l'exécution des étapes du procédé de tatouage selon l'une quelconque des revendications 1 à 14 lorsque ledit programme est exécuté sur un ordinateur.

**22.** Produit programme d'ordinateur comprenant des instructions de code de programme enregistré sur un support utilisable dans un ordinateur, comprenant :

- des moyens de programmation lisibles par ordinateur pour effectuer une étape d'insertion d'au moins un bit de tatouage sur au moins un vecteur de mouvement obtenu par estimation de mouvement entre deux images de ladite séquence, de façon à obtenir au moins un vecteur de mouvement tatoué, ledit vecteur de mouvement étant repéré par ses coordonnées dans un espace de référence, partitionné en deux types de zones complémentaires, à chacun desquels est associée une valeur binaire distincte ;
- des moyens de programmation lisibles par ordinateur pour effectuer une étape de modification, si nécessaire, des coordonnées dudit vecteur de mouvement, de façon qu'il se situe dans une zone de valeur binaire correspondant audit bit de tatouage à insérer ;
- des moyens de programmation lisibles par ordinateur pour effectuer une étape de détermination d'au moins deux vecteurs de mouvement tatoués potentiels et une étape de sélection, parmi lesdits vecteurs de mouvement tatoués potentiels, d'un vecteur de mouvement tatoué optimal, selon au moins un critère prédéterminé, de façon que les coordonnées modifiées soient celles dudit vecteur de mouvement tatoué optimal.

**23.** Programme d'ordinateur comprenant des instruction de code de programme pour l'exécution des étapes du procédé d'extraction d'un tatouage selon l'une quelconque des revendications 15 à 17 lorsque ledit programme est exécuté sur un ordinateur.

**24.** Signal représentatif d'une séquence vidéo d'images tatouée selon le procédé de tatouage de l'une quelconque des revendications 1 à 14.

Génération d'une marque
de longueur N

— 11

Estimation de mouvement entre
deux images $I_t$ et $I_{t'}$ ( $t \neq t'$ ) pour
P couples d'images de la séquence
vidéo ( $I_1, ... I_M$ ) avec $P \leqslant M$

— 12

Sélection d'un ensemble de
T vecteurs de mouvement
calculés à marquer

— 13

Pour chaque vecteur sélectionné,
recherche de tous les vecteurs de
mouvement tatoués possibles situés
dans une zone de recherche
de taille prédéterminée

— 14

Pour chaque vecteur sélectionné,
détermination du vecteur tatoué
optimal, parmi tous les vecteurs
tatoués potentiels, qui maximise
un critère de PSNR

— 15

Génération d'une séquence vidéo
marquée par compensation de
mouvement relative aux vecteurs
de mouvement tatoués optimaux

— 16

Fig. 1

Fig. 2

Fig. 3

Fenêtre de recherche = 5

Fenêtre de recherche = 3

43

42

Grille de référence
sur laquelle on
plaque le vecteur
à modifier

41

## Fig. 4

Fenêtre de recherche = 5

Fenêtre de recherche = 3

$\delta$d

43

42

Grille de référence
sur laquelle on
plaque le vecteur
à modifier

52

31

41

51

## Fig. 6

pixels parcourus

41

31

84

82

41

83

81

Fig. 5

Fig. 7

Fig. 8